# EUROPEAN PATENT APPLICATION

(11) **EP 1 094 587 A1**
(43) Date of publication of application: **25.04.2001**
(21) Application number: 99121069.1
(22) Date of filing: 21.10.1999
(51) Int. Cl.: H02H 7/18, H02J 7/00

(54) **Mobile terminal for a wireless telecommunication system comprising a rechargeable battery and method for preventing bulging of said rechargeable battery**

(71) Applicant: Sony International (Europe) GmbH, 50829 Köln (DE)
(72) Inventor: Winkler, Gregor, Sony International (Europe) GmbH, Humboldtstrasse 8, 85609 Aschheim (DE)
(74) Representative: Körber, Martin, Dipl.-Phys.

(57) **Abstract**

The present invention relates to a mobile terminal (1) for a wireless communication system, with a rechargeable battery (7) for providing a voltage as power supply for the mobile terminal (1), voltage detecting means (8) for detecting the voltage of the battery (7), temperature detecting means (9) for detecting a temperature of or close to the battery (7) and discharge means (11, 12) for discharging the battery (7) on the basis of the detected temperature and the detected voltage, whereby the discharge means (11, 12) comprises converting means (12) for converting electrical energy into mechanical energy to discharge the battery. Further, the present invention relates to a method for preventing bulging of a rechargeable battery (7) in a mobile terminal (1) of a wireless communication system.

The present invention thereby enables a simple and effective way of avoiding bulging in a rechargeable battery of a mobile terminal so that the volume and the manufacturing costs of the mobile terminal can be lowered and the performance of the battery can be increased.

## Description

The present invention relates to a mobile terminal for a wireless communication system comprising a rechargeable battery and a method for preventing bulging of the rechargeable battery of such a mobile terminal.

Mobile terminals of wireless communication systems, as e.g. the GSM system, are usually powered by rechargeable batteries, which are contained in a removable battery pack electrically and mechanically connectable to the casing of the mobile terminal. Thereby, different kinds of batteries exist, e.g. NiCad, NiMH or Lithium Ion batteries. Lithium Ion batteries are becoming more and more popular due to their very good cycling behaviour (no memory effect), low leakage currents and very high capacity of storing energy.

The use of rechargeable batteries in mobile terminals of wireless communication systems requires the optimisation of various contradicting parameters. First, the batteries should be as large as possible to be able to store as much energy as possible. On the other hand, mobile terminals for wireless telecommunication systems have to be as small as possible. Secondly, the more energy a battery is able to store, the heavier the battery usually is. On the other hand, mobile terminals for wireless communication systems have to be as light as possible. Further, the mobile terminals and thus the rechargeable batteries are used in a wide temperature range and are, particularly in summer time, exposed to very high temperatures.

The exposure to high temperatures, however, causes problems for some of the battery types. For example, Lithium Ion batteries tend to buldge when they are exposed to a high temperature when they are fully charged. This feature is particularly critical for prismatic battery cells. Bulging means that the battery volume increases when a certain high temperature value and/or a certain voltage value of the battery are reached. Usually, the critical voltage value corresponds essentially to the full charge state of the battery. The bulging is an effect which has to be taken into consideration and compensated for in the structure of the battery or the battery pack in which the battery is contained. For example, an air gap between the plastic casing of the battery pack and the battery or the battery cells is provided so that the battery or the battery cells are able to increase their volume when reaching a certain temperature and/or voltage level. However, this increases the size and the manufacturing complexity of the battery and thus the battery pack.

The bulging phenomenon is encompanied by a deterioration of the electrical properties of the batteries, i. e. a degradation in the electrolyte and/or the active material of the batteries leading to a reduction of the battery capacity. The result is that the batteries cannot be recharged to their original capacity value or only after an significantly prolonged recharging process. JP08045549 proposes e.g. a protection apparatus for a secondary (rechargeable) battery consisting of a voltage sensor for detecting the terminal voltage of the battery, a temperature sensor for detecting the temperature of the battery and the controller. When the relation between the voltage and the temperature falls within a predetermined range indicating a deteriorated capacity, a controller sends a cooling request. This activates a cooling element which cools the secondary battery. Thus, a decrease in capacity as well as a deterioration of the secondary battery is prevented. EP 0 477 908 B1 discloses also a protective apparatus for secondary batteries. The protective apparatus comprises a voltage detecting means detecting the voltage of the battery and a temperature detecting means for detecting a temperature of or close to the battery. Further, the protective apparatus comprises a discharge means for discharging the battery on the basis of the detected temperature and the detected voltage. The discharge means is thereby a discharging resistor converting electrical energy of the battery into heat to gradually lower the battery voltage. The use of a resister for discharging the battery, however, is not effective in preventing the bulging in a battery, since the bulging phenomenon shows at a certain high temperature and a certain charge voltage of the battery. Lowering of the charge voltage of the battery by converting electrical energy into heat, however, further increases the temperature in or close to the battery, so that the bulging effect cannot be prevented effectively.

The object of the present invention is therefore to provide a mobile terminal for a wireless telecommunication system comprising a rechargeable battery, in which the bulging of the battery can be prevented effectively. The object of the present invention is further, to provide a method for effectively preventing bulging of a rechargeable battery in a mobile terminal of a wireless communication system.

The above object is achieved by a mobile terminal for a wireless communication system according to claim 1, comprising a rechargeable battery providing a voltage as power supply for the mobile terminal, voltage detecting means for detecting the voltage of the battery, temperature detecting means for detecting a temperature of or close to the battery, and discharge means for discharging the battery on the basis of the detected temperature and the detected voltage, whereby said discharge means comprises converting means for converting electrical energy into mechanical energy to discharge the battery.

The above object is further achieved by a method for preventing bulging of a rechargeable battery in a mobile terminal of a wireless communication system according to claim 9, comprising the steps of detecting the voltage of the battery, detecting a temperature of or close to the battery, and discharging the battery on the basis of the detected temperature and the detected voltage by means of converting electrical energy into mechanical energy.

The present invention therefore enables a simple and effective way of discharging a battery of a mobile terminal by converting the electrical energy of the battery into mechanical energy to discharge the battery and consequently to prevent bulging of the battery. Thereby, the conversion of electrical into mechanical energy is usually not achieved by 100%, but only a certain part of the electrical energy can be converted into mechanical energy and the rest is converted into heat.

Advantageously, the converting means of the mobile terminal according to the present invention is activated on the basis of the detected temperature and the detected voltage so that bulging of the battery is prevented.

Further advantageously, the converting means for converting electrical energy into mechanical energy to discharge the battery is a vibrating means. Alternatively, the converting means may advantageously be a buzzer. In both cases, the converting means is advantageously further adapted to mechanically output signals to a user of the mobile terminal. The signals may e.g. be alarm signals, call signals etc., i.e. signals which replace or accompany acoustic signals for the normal operation of the mobile terminal.

In case that the discharge means comprises e.g. a vibrating means as converting means for converting electrical energy into mechanical energy, the normal output signals of the mobile terminal, i.e. alarm signals, control signals, indication signals or the like, can be output as vibration signals by the vibrating means. Alternatively, in case that the converting means of the discharge means is a buzzer, normal output signals of the mobile terminal can be output by the buzzer in form of buzzing signals.

Further advantageously, the discharge means discharges the battery when the voltage detecting means detects that the voltage of the battery exceeds a preset threshold voltage and the temperature means detects that the temperature of or close to the battery exceeds a preset threshold temperature. Thus, fixed levels for the temperature and the voltage are set, whereby the excession of both levels at the same time leads to an activation of the discharge means to lower the charge voltage of the battery in order to avoid bulging.

Alternatively, the discharge means advantageously discharges the battery on the basis of a preset functional relation between the voltage and the temperature so that the battery is discharged when a lower voltage and a higher temperature or a higher voltage and a lower temperature are detected. This alternative is advantageous in case that the chosen battery type shows the bulging phenomenon not from a fixed temperature value and a fixed voltage value on, but from voltage and temperature values on which depend on each other according to a preset functional relation. In other words, the bulging phenomenon starts in this case from a voltage and a temperature level on, which are inversely proportional to each other, i.e. from a lower voltage and a higher temperature or a higher voltage and a lower temperature on.

Further advantageously, the mobile terminal comprises a removable battery pack, in which the battery, the voltage detecting means, the temperature detecting means and the discharge means are contained. Alternatively, the removable battery pack may only comprise the battery, the voltage detecting means and the temperature detecting means, whereby the discharge means is part of the rest of the mobile terminal. Further alternatively, the removable battery pack may only comprise the battery and the temperature detecting means, whereby the voltage detecting means and the discharge means are comprised in the rest of the mobile terminal.

In the following description, the present invention is explained in more detail on the basis of a preferred embodiment thereof relating to the enclosed drawings, in which
figure 1 shows a schematic diagram of a mobile terminal according to the present invention,
figure 2 shows a flow chart explaining an example of the method for preventing bulging according to the present invention, and
figure 3 shows a voltage/temperature-diagram for explaining the functional relation between the voltage and the temperature above which the bulging phenomenon shows.

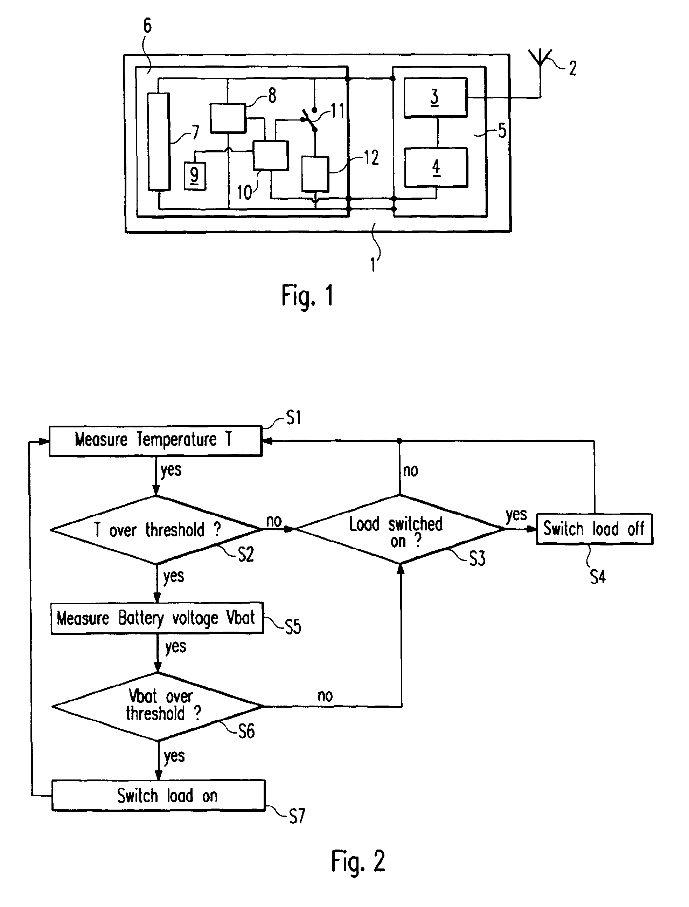

In figure 1, a mobile terminal 1 according to the present invention is schematically shown. The mobile terminal 1 may e.g. be a mobile terminal of the GSM- or the UMTS-system and comprises an antenna 2 for transmitting and receiving high frequency signals to and from a base station of the telecommunication system. The antenna 2 is connected to a communication block 5 of the mobile terminal 1, which e.g. comprises a transmitting - and receiving means 3, e.g. comprising the high frequency part of the mobile terminal 1 for downconverting and upconverting signals, and a control means 4 for controlling the operation of the mobile terminal 1. The communication block 5 of the mobile terminal 1 comprises all further necessary elements for operating the mobile terminal 1 in the respective wireless telecommunication system, like coders, decoders, a display, a keypad, etc. These elements are not relevant in view of the present invention and are therefore not shown for the sake of clarity.

The mobile terminal 1 according to the present invention further comprises a battery pack 6 including a rechargeable battery 7 for providing a voltage as a power supply for the communication block 5 of the mobile terminal 1. The battery pack 6 can be electrically and mechanically connected to the mobile terminal 1. In order to replace the battery pack 6 if it is empty or defect, the battery pack 6 can be removed from the mobile terminal 1 to be replaced by a fully charged battery pack. Although only a single battery 7 is shown in figure 1, the battery pack 6 can comprise a number of batteries 7 or one or more battery cells depending on the required application.

The battery pack 6 of the mobile terminal shown in figure 1 further comprises a voltage detecting means 8 connected in parallel to the battery 7 for detecting the charge voltage of the battery 7. Further, the battery pack 6 comprises a temperature detecting means 9 for detecting the temperature of or close to the battery 7. The temperature detecting means 9 and the voltage detecting means 8 are connected to a control means 10, e.g. a microcontroller or a simple analog ASIC, which receives corresponding detection signals from the voltage detecting means 8 and the temperature detecting means 9. The control means 10 controls a discharge means comprising a converting means 12 and a switch 11, which connects or disconnects the converting means 12 to the battery 7. The converting means 12 is, in case that the switch 11 is in its close state, connected in parallel to the battery 7 to discharge electrical energy from the battery 7. The control means 10 controls the opening and the closing of the switch 11 on the basis of the detection signals received from the voltage detecting means 8 and the temperature detecting means 9. As soon as the temperature and the battery voltage reach a critical range, the switch 11 is closed by the control means 10 and the converting means 12 produces the voltage of the battery 7 so that bulging of the battery 7 is prevented. The converting means 12 converts the electrical energy from the battery 7 into mechanical energy so that the voltage of the battery 7 is reduced. The converting means 12 may e.g. be a vibrating means, a buzzer or the like. The converting means 12 may further be adapted to output mechanical signals to a user of the mobile phone, in case that a call is received or the like. In case that the converting means 12 is a vibrating means, the normal output signals of the mobile phone, as e.g. alarm signals, control signals, indication signals or the like, are output as vibration signals by the vibrating means. The same is true in case that the converting means 12 is a buzzer. In this case, the normal output signals of the mobile terminal can be output as buzzing means by the buzzer. In this case, the converting means 12 can be connected to the control means 4 of the mobile terminal 1. The control means 4 then controls the converting means 12 to output corresponding output signals, e.g. alarm signals, call signals or the like.

The control means 10 can control the discharging of the battery 7 in two different ways. In a simple example, the control means 10 activates the discharge means, i.e. closes the switch 11 so that the converting means 12 discharges the battery 7, when the temperature measured by the temperature detecting means 9 exceeds a predetermined threshold value and the voltage detected by the detection means 8 exceeds a predetermined threshold value at the same time. For example, the temperature threshold value could be 60°C and the voltage threshold value could be 90% of the maximum charge voltage of the battery 7. In other words, the control means causes the discharging of the battery 7 in case that the temperature of or close to the battery 7 exceeds 60°C and the charge voltage of the battery 7 exceeds 90% of its maximum charge value at the same time. Then, the control means 10 closes the switch 11 and the converting means 12 transforms electrical energy from the battery 7 into mechanical energy very quickly, so that the voltage of the battery 7 is lowered significantly. As soon as the voltage detected by the voltage detection means 8 drops under a second voltage threshold value which is lower than the first voltage threshold value of e.g. 90% of the maximum charge voltage, a control means 10 reopens the switch 11 and the battery pack 6 continues to operate normally. The same thing happens when the temperature measured by the temperature detecting means 9 drops under a second temperature threshold value below the first temperature threshold value of e.g. 60°C. This first example provides a simple, cheap and effective possibility of preventing bulging of the battery pack 7 of the mobile terminal according to the present invention.

It is to be noted, that the battery pack 6 of the mobile terminal according to the present invention is prevented from bulging even when the battery pack 6 is not connected to the mobile terminal 1. For example, in case that the battery pack 6 is lying on a window bend or on top of a radiator, the converting means 12 is operative for converting the electrical energy of the battery 7 into mechanical energy to discharge the battery and thus to prevent the battery from bulging. Thereby, the battery pack 6 has not to be connected to the mobile terminal 1.

Although in the mobile terminal 1 shown in figure 1, the battery pack 6 is shown and described to comprise the important elements of the present invention, namely the rechargeable battery 7, the voltage detecting means 8, the temperature detecting means 9 and the discharge means 11, 12, one or more of these elements can be realised in the rest of the mobile terminal 1. For example, the discharge means 11, 12 may be part of the mobile terminal 1 and not the battery pack 6. Alternatively, the discharge means 11, 12 as well as the voltage detecting means 8 may be realised in the mobile terminal 1 and not in the battery pack 6.

This first example is shown schematically in the flow chart shown in figure 2, in which the temperature means 8 measures the temperature T of or close to the battery 7 in a first step S1. In a second step S2, the control means 10 compares the temperature value T received from the temperature detecting means 9 with a first temperature threshold value. In case that the measured temperature T received from the temperature detecting means 9 does not exceed the first temperature threshold value, the control means 10 checks in a step S3, if the switch 11 is closed, i.e. if the converting means 12 is discharging the battery 7 at the moment. In case that the switch 11 is open, the processing goes back to step S1. In case that the control means 10 detects in step S3, that the switch 11 is closed and the battery 7 is being discharged by the converting means 12, the switch 11 is switched open so that the discharging of the battery 7 by the converting means 12 is interrupted. Then, the processing goes back to step S1.

In case that the control means 10 detects in step S2, that the measured temperature T received from the temperature detecting means 9 exceeds the first temperature threshold value, the control means 10 activates the voltage detecting means 8 to measure the voltage of the battery 7. Thereafter, the control means 10 compares the measured voltage value received from the voltage detecting means 8 with a first voltage threshold value in a step S6. In case that the voltage value received from the voltage detecting means 8 does not exceed the first voltage threshold value, the control means goes to step S3, in which it checks if the switch 11 is open or not. In case that the control means 10 determines in step S6 that the voltage value received from the voltage detecting means 8 exceeds the first threshold value, it closes the switch 11 in a next step S7 so that the converting means 12 discharges the battery 7. A first temperature threshold value and a first voltage threshold value are e.g. stored in a memory connected to the control means 10.

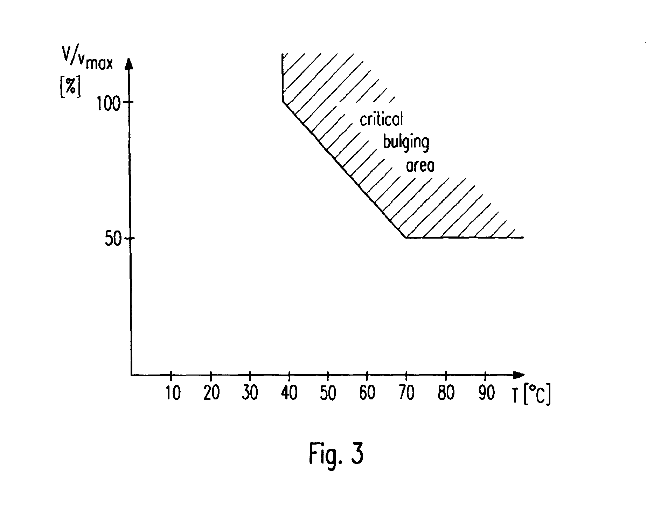

According to a second more complex example, the control means 10 controls the discharging of the battery 7 on the basis of a preset functional relation between the voltage and the temperature. Thereby, it is assumed that the bulging phenomenon occurs in a critical area which is determined by a functional relation between the voltage and the temperature of the battery pack 7 as shown in the diagram of figure 3. In the diagram shown in figure 3, the horizontal axis shows the temperature in °C and the vertical axis shows the voltage V of the battery 7 divided by the maximum charge voltage of the battery 7 in %. 100% means that the battery 7 is fully charged. The functional relation between the voltage and the temperature is - at least in a temperature range of 40-70°C and a voltage range of 50-100% - so that bulging occurs when a lower voltage and a higher temperature or a higher voltage and a lower temperature are detected. For example, if the control means 10 receives a temperature value of 70°C from the temperature detecting means 9 and a voltage value corresponding to 50% of the maximum charge voltage from the voltage detecting means 8, the switch 11 is closed so that the converting means 12 discharges the battery 7 in order to avoid bulging. On the other hand, if the control means 10 e.g. receives a temperature value corresponding to 40°C from the temperature detecting means 9 and a voltage value corresponding to 100% of the maximum charge voltage from the voltage detecting means 8, it also closes the switch 11 so that the battery 7 is discharged by the converting means 12. Since bulging only occurs in the area as indicated in figure 3, i.e. when corresponding voltage/temperature values are exceeded, and the functional relation indicated in the diagram of figure 3 is stored in the control means 10 so that the control means 10 closes the switch 11 when the corresponding voltage/temperature values are exceeded, bulging of the battery 7 is avoided in an effective and precise way.

It is to be noted, that the battery pack 7 is e.g. a Lithium Ion battery, or any other battery type which shows the bulging phenomenon when a certain voltage and/or temperature values are exceeded. Further, the battery pack 6 according to the present invention may have additional safety features, such as an overcharge protection, overcurrent protection, temperature control so that the battery 7 is not charged at high temperature at all or the like. Further, one or more elements of the voltage detecting means 8, the control means 10, the switch 11, the converting means 12 and the temperature detection means 9 may be provided in the mobile terminal 1 instead of the battery pack 6. Since the battery pack 6 comprising the battery 7 is electrically connected to the mobile terminal 1, the discharge control according to the present invention may be performed identically when the corresponding control elements are incorporated in the mobile terminal 1.

## Claims

1. Mobile terminal (1) for a wireless communication system, with
a rechargeable battery (7) providing a voltage as power supply for the mobile terminal (1),
voltage detecting means (8) for detecting the voltage of the battery (7),
temperature detecting means (9) for detecting a temperature of or close to the battery (7), and
discharge means (11, 12) for discharging the battery (7) on the basis of the detected temperature and the detected voltage,
**whereby**
said discharge means (11, 12) comprises converting means (12) for converting electrical energy into mechanical energy to discharge the battery.

2. Mobile terminal for a wireless communication system according to claim 1,
**characterized in**,
that said converting means (12) is activated on the basis of the detected temperature and the detected voltage so that bulging of said battery (7) is prevented.

3. Mobile terminal for a wireless communication system according to claim 1 or 2,
**characterized in,**
that said converting means (12) comprises a vibrating means.

4. Mobile terminal for a wireless communication system according to claim 1 or 2,
**characterized in**,
that said converting means (12) comprises a buzzer.

5. Mobile terminal for a wireless communication system according to claim 3 or 4,
**characterized in**,
that said converting means (12) is further adapted to mechanically output signals to a user of the mobile terminal (1).

6. Mobile terminal for a wireless communication system according to one of the claims 1 to 5,
**characterized in**,
that said discharge means (11, 12) discharges said battery (7) when said voltage detecting means (8) detects that the voltage of the battery (7) exceeds a preset threshold voltage and said temperature means (9) detects that said temperature of or close to said battery (7) exceeds a preset threshold temperature.

7. Mobile terminal for a wireless communication system according to one of the claims 1 to 5,
**characterized in**,
that said discharge means (11, 12) discharges said battery (7) on the basis of a preset functional relation between said voltage and said temperature so that said battery (7) is discharged when a lower voltage and a higher temperature or a higher voltage and a lower temperature are detected.

8. Mobile terminal for a wireless communication system according to one of the claims 1 to 7,
**characterized by**
a removable battery pack (6) comprising said battery (7), said voltage detecting means (8), said temperature detecting means (9) and said discharge means (11, 12).

9. Mobile terminal for a wireless communication system according to one of the claims 1 to 8,
**characterized in**
that said discharge means (12) outputs normal output signals in a normal operation mode of the mobile terminal.

10. Battery pack (6) for a mobile terminal (1) of a wireless telecommunication system, with
a rechargeable battery (7) providing a voltage as power supply for the mobile terminal (1),
voltage detecting means (8) for detecting the voltage of the battery (7),
temperature detecting means (9) for detecting a temperature of or close to the battery (7), and
discharge means (11, 12) for discharging the battery (7) on the basis of the detected temperature and the detected voltage,
**whereby**
said discharge means (11, 12) comprises converting means (12) for converting electrical energy into mechanical energy to discharge the battery.

11. Method for preventing bulging of a rechargeable battery (7) of a mobile terminal (1) of a wireless communication system, comprising the steps of
detecting the voltage of the battery (7),
detecting a temperature of or close to the battery (7), and
discharging the battery (7) on the basis of the detected temperature and the detected voltage by means of converting electrical energy into mechanical energy.

12. Method for preventing bulging of a rechargeable battery according to claim 11,
**characterized in**,
that said conversion of electrical energy into mechanical energy is performed by means of a vibrating means.

13. Method for preventing bulging of a rechargeable battery according to claim 11,
**characterized in**,
that said conversion of electrical energy into mechanical energy is performed by means of a buzzer.

14. Method for preventing bulging of a rechargeable battery according to claim 11, 12 or 13,
**characterized in**,
that said battery (7) is discharged when it is detected that the voltage of the battery exceeds a preset threshold voltage and that said temperature of or close to said battery exceeds a preset threshold temperature.

15. Method for preventing bulging of a rechargeable battery according to claim 11, 12 or 13,
**characterized in**,
that said battery (7) is discharged on the basis of a preset functional relation between said voltage and said temperature so that said battery is discharged when a lower voltage and a higher temperature or a higher voltage and a lower temperature are detected.
